# EUROPEAN PATENT SPECIFICATION

(11) **EP 2 787 749 B1**
(45) Date of publication and mention of the grant of the patent: **04.04.2018**
(21) Application number: 14169090.9
(22) Date of filing: 02.06.2005
(51) Int. Cl.: H04W 4/02

(54) **Processing of location-based information**
Verarbeitung von auf der Position basierenden Informationen
Traitement d'informations basées sur la localisation

(30) Priority: 17.06.2004 FI 20045228
(43) Date of publication of application: 08.10.2014
(62) Divisional of application: 05744439.0
(73) Proprietor: Nokia Technologies Oy, 02610 Espoo (FI)
(72) Inventor: Kekonen, Janne, 90540 Oulu (FI)
(74) Representative: Kolster Oy Ab

(56) References cited:
- WO-A2-01/76120
- WO-A2-02/052815
- WO-A2-2004/021218
- US-A1- 2003 006 911
- US-A1- 2003 065 805
- US-A1- 2003 135 581
- US-B1- 6 587 835

## Description

### FIELD

The invention relates to a method for processing location-based information in a mobile terminal, to a mobile terminal, and to a computer program product comprising instructions which, when the program is executed by a computer, cause the computer to carry out the steps of the method.

### BACKGROUND

The supply of commercial and general-purpose services can be extended to comprise location-based services, i.e. services dependent on the location of the user, by using wireless data transmission technology. Examples of such services are location-based news and weather services, event advertisements, tourist guides, timetable services, shop and restaurant advertisements, map and positioning services, and search and entertainment services.

According to the prior art, location-based information is transmitted either as SMS (Short Message System) messages or by using push technology as service messages to a terminal. A great deal of location-based messages may be received, and the user has to read each message separately, accept the storage of each message, or delete the message. This causes extra and unnecessary trouble to the user, especially if s/he is not interested in every type of location-based information. The user also needs to delete old messages stored earlier. The information in the stored messages may also be outdated before the user has time to utilize it.

WO 2004/021218 discloses an apparatus receiving location-based content in a list organized by location conditions.

In WO 02/052815, an idle screen of a mobile telephone device is used to show updated information of a kind from a source selected by a user (e.g. financial information, news, traffic etc.). Placing information of interest to the user in the idle screen makes that information instantly accessible without the user having to navigate to the required function (e.g. a micro-browser) and select it.

US 2003/065805 discloses a system, method, apparatus and computer program product for providing location based functions and mobile e-commerce. Programming controls the operation to provide functions based on location data, to facilitate commercial exchanges by wirelessly exchanging payment and product information with venders, to identify services such as venders meeting selection criteria, to wirelessly exchange information with other users and systems, and other functions and services.

US 2003/006911 discloses an interactive advertising system for providing interactive multimedia content to a client positioned in close proximity to an advertising display unit, the interactive advertising system comprising an advertising server, a data communications network, and an advertising platform. The advertising server stores client and advertising databases which contain records relating to the types of clients and the types of advertisements. The advertising server is coupled to the advertising platform over the communications network. The advertising platform comprises a multimedia display, a platform controller, and a GPS receiver. The multimedia display is configured and is controlled by the platform controller to provide interactive multimedia content to a client according to the existing conditions. Conditions can include the specific demographic or psychographic profile of the client, the time of day and the geographical position of the advertising platform. The client can interact with the advertising platform in response to multimedia content and receive coupons and/or purchase items offered through the displayed advertising. The system continuously attracts new clients and tracks, records and quantifies client information over time.

WO 01/76120 discloses a software scheduling agent. The software scheduling agent is part of a probabilistic modelling system in which the scheduler operates to perform constrained random variation with selection. Digital content is generated, organized, and stored on a communication network and/or client devices. An electronic digital content wrapper, which holds information in the form of data and metadata related to the digital content is associated with each item of digital content. Contextual profiles for each user and each item of digital content are established by the users and the network and maintained by a service provider on the communication network. The software scheduling agent compares the contextual digital content profile for each item of digital content to the contextual user profile for each user to determine which digital content should be offered for presentation to each user. The comparison and determination of which items of digital content should be offered for presentation to which users is performed by a process of constrained random variation used to determine which items of digital content would most likely be relevant or interesting to the user.

US 2003/135581 discloses a method for distributing information based on a geographic location determined for the information. The method receives a set of information, and a geographic location profile of a user. The method determines a geographic location based on the set of information. The method appends the geographic location to the set of information. The method then sends, through a network, the set of information to a machine to be used by the user depending on (i) the geographic location appended to the set of information and (ii) the geographic location profile of the user. The set of information includes information on at least one of news, business, entertainment, sports, and people. The geographic location profile of the user includes a geographic location of interest to the user.

US 6 587 835 discloses a system in which a handheld computing device may be used to provide a user with shopping assistance services. A shopping assistance service may allow a user to obtain directory information for a shopping mall. The location of the handheld computing device may be monitored. Services may be provided to the user based on the location of the handheld computing device.

### BRIEF DESCRIPTION

The invention is defined in the independent claims. Preferred embodiments are set out in the dependent claims.

### LIST OF FIGURES

The invention will now be described in greater detail by means of preferred embodiments and with reference to the attached drawings, in which
Figure 1 illustrates the provision of location-based information,
Figure 2 is a block diagram showing an embodiment of a mobile terminal, and a transmitter unit connected to the terminal and transmitting location-based information,
Figure 3 illustrates one embodiment of the computer program structure of the mobile terminal,
Figure 4 shows an embodiment of a user interface component, and
Figure 5 is a flow chart illustrating a method for processing location-based information in a mobile terminal.

### DESCRIPTION OF EMBODIMENTS

Embodiments not covered by the claims are to be regarded as example.

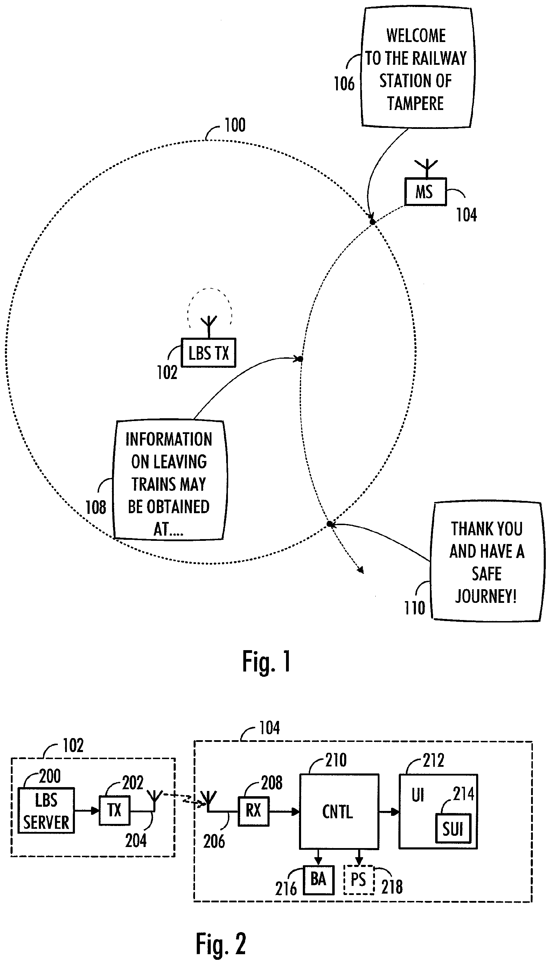

Figure 2 shows one embodiment of the structure of a mobile terminal 104 configured to receive location-based information. In addition, it shows an embodiment of a transmitter system 102 providing location-based information and connected to the terminal 104. The terminal 104 can be a device suited for data transmission anywhere, such as a subscriber terminal of a mobile system, a portable computer equipped with a telecommunications connection, a PDA (Personal Digital Assistant) device, or any other corresponding transceiver unit. The terminal 104 can also be a receiver unit specifically designed for processing location-based information.

The connection between the terminal 104 and transmitter system 102 can be implemented using wireless data transmission technology. Wireless data transmission technology refers herein to any system that enables wireless data transmission to mobile terminals within the service area of the system. The system may be GSM (Global System for Mobile Communications), GPRS (General Packet Radio Service), UMTS (Universal Mobile Telecommunications System), or any other corresponding mobile system, a system employing the Bluetooth® or IrDA (Infrared Data Association) data transmission technology, or a WLAN (Wireless Local Area Network) system. The area within which location-based information is transmitted can be determined by defining the location coordinates within which the information is transmitted, or by restricting the number or service area of transmitter units transmitting location-based information. In the first case, the movement of users can be monitored using an appropriate positioning method, and when the user is within the service area, location-based information is transmitted to his or her terminal. The positioning system can for instance be a GPS (Global Positioning System) system, an E-OTD (Enhanced Observed Time Difference) system or a corresponding positioning system based on triangulation, or - if a more approximate positioning is sufficient - a transmitter unit is determined, in the service area of which the terminal moves.

Let us next examine the structure of the mobile terminal 104 with reference to Figure 2. The terminal 104 of Figure 2 comprises an antenna 206 and a receiver 208 that can be a prior-art radio receiver and operate in a Bluetooth® data transmission system, for instance. In addition, the terminal 104 comprises a processing unit 210 that controls and monitors the functions of the terminal 104, such as the processing of a received radio signal and the management of the components of the user interface 212. The processing unit 210 also controls the reception of location-based information and the dynamic processing thereof in the terminal 104.

The dynamic processing of location-based information comprises identifying a received message as a location-based message, storing the message in the terminal, modifying the location-based information, if the sender of the location-based information changes the content of the location-based information, and deleting outdated location-based information from the terminal.

The processing unit 210 can process the location-based information under the control of a message processing application implemented by software and installed in the terminal 104. The processing unit 210 is today generally implemented as a digital signal processor (DSP) that contains any software necessary to control the terminal 104, but various hardware solutions - such as ASIC (Application-Specific Integrated Circuit) - are also possible.

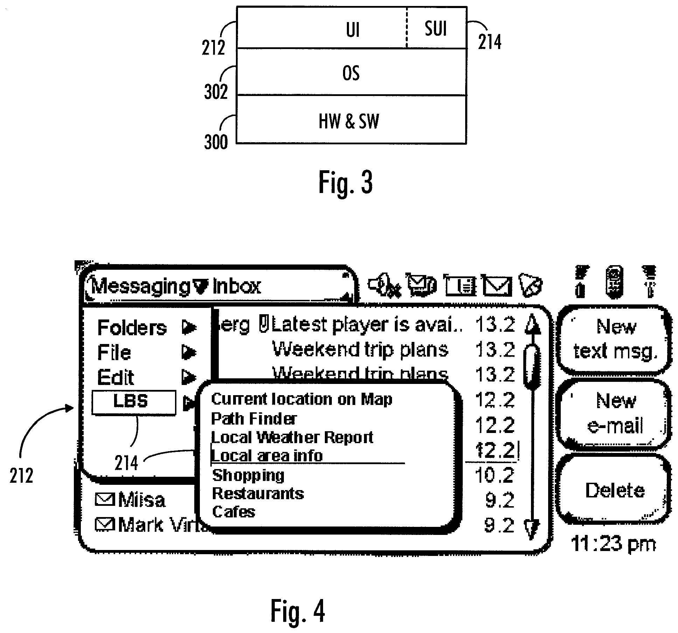

The terminal 104 can also comprise a positioning system 218 or the terminal 104 can be connected to an external positioning system. The positioning system can be used when checking whether the terminal 104 is in an area in which location-based information is transmitted. The terminal 104 also typically comprises a voltage source 216, which can be a chargeable battery, for example. The terminal 104 also comprises a user interface 212 comprising a display, a management unit - such as a keyboard or touch screen - and an operating system. The user interface 212 also comprises a user interface component 214 designed to display location-based information. The user interface component 214 can be a menu-type solution as shown in Figure 4, in which the location-based information is divided into categories by subject, on the basis of which the user finds the desired location-based information. The user interface component 214 can also be a separate software application which when executed displays the available location-based information to the user. The software application can be an additional component to the message processing application or a software application separate from the message processing application.

Figure 3 shows an example of the software layers of the mobile terminal 104. The hardware and the software 300 controlling the hardware - especially the processing unit 210 - constitute the lowest layer. The operating system 302 controls the initiation and execution of the software in the terminal 104 and thus acts as an interface between the hardware and software. The operating system can for instance be Symbian OS used generally in mobile stations. The software in the terminal 104 comprises the user interface 212. One component of the user interface 212 is the dynamic user interface component 214 designed for displaying location-based information.

The above thus describes the mobile terminal 104 having a data transmission connection to a transmitter system 102 transmitting location-based information. The transmitter system may comprise a server unit 200, transmitter unit 202, and antenna 204. The server unit 200 defines the content of the location-based information to be transmitted and the area in which the location-based information is transmitted. Even though in Figure 2, the server unit 200 is only connected to one transmitter unit 202, it can also be connected to several transmitter units, thus offering location-based information in a wider area. The transmitter system 102 can thus be a radio data transmission system or a part thereof or a single transmitter unit that transmits location-based information within its own service area.

Figure 1 shows an embodiment of the invention. The mobile terminal 104 arrives at the service area 100 of the transmitter unit 102 transmitting location-based information, in this case at a railway station. When arriving at the service area 100, the terminal 104 starts to receive location-based information related to the service area 100 as service messages 106 transmitted using push technology. Controlled by the message processing application, the terminal 104 identifies the received message as location-based information and stores the information in the message in the terminal 104. Controlled by the message processing application, the terminal also updates the content of the user interface component 214 containing location-based information so that the received location-based information becomes available to the user. A notification on the new content in the user interface component 214 containing location-based information is forwarded to the user of the terminal 104. The user can be notified using an icon on the display of the terminal 104, an audio or vibration signal or some other known indication method.

When arriving at a railway station, the user of the terminal 104 may need information on train timetables, and opens from the user interface component 214 containing location-based information the category containing local information to find information related to the railway station, such as timetables. The timetable information may have been transmitted to the terminal 104, in which case it can be read directly from the user interface component 214, or only information on where to find timetable information may have been transmitted to the terminal 104. In the latter case, the URL (Uniform Resource Locator) address of an Internet web page may have been transmitted to the terminal, and if the user so desires, the terminal 104 can open the web page. It is also possible that information on where the timetables of the railway station are located is transmitted to the terminal. The message can be similar to 108, for instance.

When the terminal 104 exits the service area 100 of the transmitter unit 102 transmitting location-based information, the terminal, controlled by the message processing application, deletes the outdated information from the user interface component 214 containing location-based information. The outdated information can also be left in the user interface component 214 for the user or it can be deleted in accordance with a criterion defined by the user, after a specific time, for instance. A message similar to 110 can also be left in the user interface component 214 for a specific time.

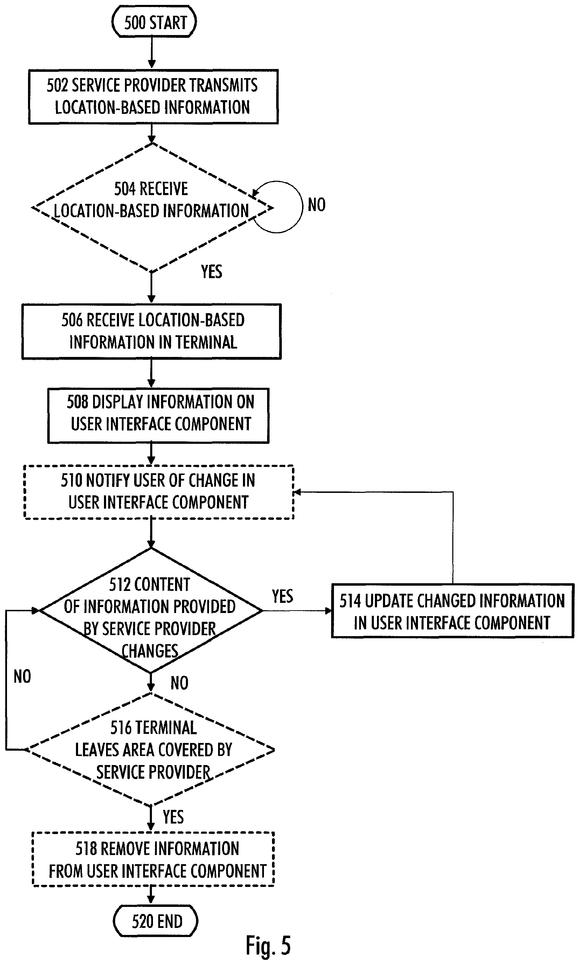

The following describes a method for processing location-based information in a mobile terminal with reference to Figure 5. The execution of the method is started in step 500, after which step 502 is executed, i.e. a transmitter unit transmitting location-based information transmits location-based messages in its service area by using push technology.

Next, step 504 is executed, in which the routine checks whether the mobile terminal is receiving location-based messages. This comprises checking the location of the terminal and the configuration of the terminal. The location of the terminal can be determined for instance by using a positioning system integrated to the terminal or a positioning system connected to the terminal. Positioning can also be left out, in which case location-based messages can be received within the service area of the transmitter system providing location-based information. By positioning, it is thus possible to define more accurately the area in which location-based information is transmitted. Checking the configuration of the terminal comprises for instance checking whether the terminal is configured to receive location-based messages. The terminal may be configured to receive all location-based message, only certain types of location-based messages or not to receive any location-based messages. The configuration of the terminal may be managed by the user.

If the terminal fulfils the criteria, the terminal receives a location-based message in step 506 which comprises identifying the received message as a location-based message and storing the message in the terminal. In the terminal, the processing of the message can be controlled by a message processing application implemented by software. After this, step 508 is executed, in which the received location-based information is displayed to the user in a specific user interface component designed to display location-based information. The user interface component can be a menu-type solution as shown in Figure 4, or a separate software application operating either as an additional component to the message processing application or as a software application separate from the message processing application. A change in the content of the user interface component containing location-based information is notified to the user in step 510 which is executed when new information is available to the user in the user interface component. The notification can be the display of a certain icon on the display of the terminal, an audio or vibration signal, or some other indication provided by a generally known signalling method.

Next, in step 512, the routine checks whether the content of the location-based information transmitted by the service provider has changed. Part of the information content may still remain unchanged. The changed information can be distinguished from the new information for instance by means of an identifier in the transmitted message. The information stored earlier in the terminal and the changed information have the same identifier, whereas the identifier of completely new location-based information cannot be found in the stored information. If it is detected that the content of the stored location-based information has changed, step 514 is executed, i.e. the content of the user interface component containing location-based information is updated. After this, the change in the location-based information can be notified to the user by using one of the above-mentioned signalling methods.

If the terminal exits the area in which the service provider transmits location-based information as a result of step 516, the location-based information related to the area is deleted from the user interface component in step 518. The exiting of the terminal from the area can be detected based on the use of a positioning system, or the terminal detects that the location-based information related to the area is no longer available from the transmitter unit. Step 518 is also executed when the transmitter unit stops transmitting location-based information, even though the terminal still is in the service area of the transmitter unit. The execution of the method is stopped in step 520.

In addition to the above-mentioned message processing methods, location-based information can also be processed according to specific criteria in the terminal. The criteria may comprise for instance limitations in the reception of location-based information, the presentation format of location-based information in the dynamic user interface component, and the deletion of location-based information after a given time. The criteria can be defined by the user.

The method can be used in a terminal of the type described above. The method can also be implemented by a computer program product that encodes a process for the processing of location-based information in a mobile terminal, the computer process comprising the actions of the method described above. The computer program product can be stored on a computer program distribution medium. The terminal can read the computer program distribution medium. The distribution medium can be any known medium used for distributing a computer program from the manufacturer/vendor to the end user. The distribution medium can for instance be a medium readable by the terminal, a program storage medium or storage medium, a memory readable by the terminal, or a software distribution package, and a signal that the terminal can read, a telecommunications signal or a compressed software package.

Even though the invention is above described with reference to the example of the attached drawings, it is clear that the invention is not restricted to it but can be modified in many ways within the scope of the attached claims.

## Claims

1. A method performed at a mobile terminal (104) comprising:
receiving (506) location-based information related to the location of the mobile terminal and transmitted wirelessly using push technology, the location-based information being received as one or more service messages transmitted using said wireless push technology which are stored in the terminal, and wherein the location-based information is transmitted to the terminal only if the location of the terminal is determined to be within a service area; and
displaying (508) the location-based information dynamically using a dynamic user interface component (214), wherein within the dynamic user interface component the location-based information is divided into categories by subject.

2. The method of claim 1 further comprising determining, at the mobile terminal, the location of the mobile terminal using a positioning system that is internal to the mobile terminal.

3. The method of claim 2 further comprising transmitting the determined location from the mobile terminal.

4. The method of claim 1 further comprising determining the location of the mobile terminal using a positioning system that is external to the mobile terminal.

5. The method of any preceding claim, wherein the dynamic user interface component comprises a dynamic menu for displaying location-based information to a user of the mobile terminal.

6. The method of any preceding claim wherein the mobile terminal is configured to receive only certain types of location-based message.

7. The method of claim 6, wherein said configuration is managed by a user of the mobile terminal.

8. The method of any preceding claim further comprising forwarding a notification of new content used to update the dynamic user interface component to a user of the mobile terminal.

9. The method of claim 8, wherein forwarding the notification to the user comprises displaying an icon on a display of the mobile terminal.

10. The method of any preceding claim, wherein displaying the location-based information dynamically comprises updating the location-based information in the terminal to correspond to the new content when the content of the transmitted location-based information changes.

11. A mobile terminal comprising means for performing the method of any of claims 1 to 9.

12. A computer program product comprising instructions which, when the program is executed by a computer, cause the computer to carry out the following method steps:
receiving (506), at a mobile terminal (104), location-based information related to the location of the mobile terminal and transmitted wirelessly using push technology, the location-based information being received as one or more service messages transmitted using said wireless push technology which are stored in the terminal, and wherein the location-based information is transmitted to the terminal only if the location of the terminal is determined to be within a service area; and
displaying (508), at the mobile terminal (104), the location-based information dynamically using a dynamic user interface component (214), wherein within the dynamic user interface component the location-based information is divided into categories by subject.

13. The computer program product of claim 12, wherein the method steps further comprise determining, at the mobile terminal, the location of the mobile terminal using a positioning system that is internal to the mobile terminal.

14. The computer program product of claim 12 or claim 13, wherein the method steps further comprise transmitting the determined location from the mobile terminal.

15. The computer program product of claim 12, wherein the method steps further comprise determining the location of the mobile terminal using a positioning system that is external to the mobile terminal.

## Patentansprüche

1. Verfahren, das an einem mobilen Endgerät (104) durchgeführt wird und umfasst:
Empfangen (506) von standortbasierten Informationen, die mit dem Standort des mobilen Endgeräts in Beziehung stehen und unter Verwendung der Push-Technologie drahtlos gesendet werden, wobei die standortbasierten Informationen als eine oder mehrere Dienstnachrichten empfangen werden, die unter Verwendung der drahtlosen Push-Technologie gesendet und im Endgerät gespeichert werden, und wobei die standortbasierten Informationen nur dann an das Endgerät gesendet werden, wenn bestimmt wird, dass der Standort des Endgeräts innerhalb eines Dienstbereichs ist; und
dynamisches Anzeigen (508) der standortbasierten Informationen unter Verwendung einer dynamischen Benutzerschnittstellenkomponente (214), wobei die standortbasierten Informationen innerhalb der dynamischen Benutzerschnittstellenkomponente nach Themen in Kategorien eingeteilt werden.

2. Verfahren nach Anspruch 1, ferner umfassend ein Bestimmen des Standorts des mobilen Endgeräts am mobilen Endgerät unter Verwendung eines Positionsbestimmungssystems, das innerhalb des mobilen Endgeräts ist.

3. Verfahren nach Anspruch 2, ferner umfassend ein Senden des bestimmten Standorts vom mobilen Endgerät.

4. Verfahren nach Anspruch 1, ferner umfassend ein Bestimmen des Standorts des mobilen Endgeräts am mobilen Endgerät unter Verwendung eines Positionsbestimmungssystems, das außerhalb des mobilen Endgeräts ist.

5. Verfahren nach einem der vorhergehenden Ansprüche, wobei die dynamische Benutzerschnittstellenkomponente ein dynamisches Menü zum Anzeigen von standportbasierten Informationen für einen Benutzer des mobilen Endgeräts umfasst.

6. Verfahren nach einem der vorhergehenden Ansprüche, wobei das mobile Endgerät nur zum Empfangen bestimmter Typen standortbasierter Nachrichten konfiguriert ist.

7. Verfahren nach Anspruch 6, wobei die Konfiguration durch einen Benutzer des mobilen Endgeräts verwaltet wird.

8. Verfahren nach einem der vorhergehenden Ansprüche, ferner umfassend ein Weiterleiten einer Meldung neuen Inhalts, der zum Aktualisieren der dynamischen Benutzerschnittstellenkomponente verwendet wird, an einen Benutzer des mobilen Endgeräts.

9. Verfahren nach Anspruch 8, wobei das Weiterleiten der Meldung an den Benutzer ein Anzeigen eines Symbols auf einer Anzeige des mobilen Endgeräts umfasst.

10. Verfahren nach einem der vorhergehenden Ansprüche, wobei das dynamische Anzeigen der standortbasierten Informationen ein derartiges Aktualisieren der standortbasierten Informationen im Endgerät umfasst, dass sie dem neuen Inhalt entsprechen, wenn sich der Inhalt der gesendeten standortbasierten Informationen ändert.

11. Mobiles Endgerät, umfassend Mittel zum Durchführen des Verfahrens nach einem der Ansprüche 1 bis 9.

12. Computerprogrammprodukt, umfassend Anweisungen, die bei Ausführung des Programms durch einen Computer den Computer zum Ausführen der folgenden Verfahrensschritte veranlassen:
Empfangen (506) von standortbasierten Informationen am mobilen Endgerät (104), die mit dem Standort des mobilen Endgeräts in Beziehung stehen und unter Verwendung der Push-Technologie drahtlos gesendet werden, wobei die standortbasierten Informationen als eine oder mehrere Dienstnachrichten empfangen werden, die unter Verwendung der drahtlosen Push-Technologie gesendet und im Endgerät gespeichert werden, und wobei die standortbasierten Informationen nur dann an das Endgerät gesendet werden, wenn bestimmt wird, dass der Standort des Endgeräts innerhalb eines Dienstbereichs ist; und
dynamisches Anzeigen (508) der standortbasierten Informationen am mobilen Endgerät (104) unter Verwendung einer dynamischen Benutzerschnittstellenkomponente (214), wobei die standortbasierten Informationen innerhalb der dynamischen Benutzerschnittstellenkomponente nach Themen in Kategorien eingeteilt werden.

13. Computerprogrammprodukt nach Anspruch 12, wobei die Verfahrensschritte ein Bestimmen des Standorts des mobilen Endgeräts am mobilen Endgerät unter Verwendung eines Positionsbestimmungssystems umfassen, das innerhalb des mobilen Endgeräts ist.

14. Computerprogrammprodukt nach Anspruch 12 oder 13, wobei die Verfahrensschritte ferner ein Senden des bestimmten Standorts vom mobilen Endgerät umfassen.

15. Computerprogrammprodukt nach Anspruch 12, wobei die Verfahrensschritte ferner ein Bestimmen des Standorts des mobilen Endgeräts am mobilen Endgerät unter Verwendung eines Positionsbestimmungssystems umfassen, das außerhalb des mobilen Endgeräts ist.

## Revendications

1. Procédé exécuté au niveau d'un terminal mobile (104) comprenant les étapes suivantes :
recevoir (506) des informations basées sur la localisation associées à l'emplacement du terminal mobile et transmises de façon sans fil à l'aide de la technologie du pousser, les informations basées sur la localisation étant reçues sous la forme d'un ou plusieurs messages de service transmis à l'aide de ladite technologie du pousser sans fil qui sont stockés dans le terminal, et les informations basées sur la localisation étant transmises au terminal uniquement si l'emplacement du terminal est déterminé comme étant situé à l'intérieur d'une zone de service ; et
afficher (508) les informations basées sur la localisation dynamiquement en utilisant un composant d'interface utilisateur dynamique (214), à l'intérieur du composant d'interface utilisateur dynamique, les informations basées sur la localisation étant divisées en catégories par sujet.

2. Procédé selon la revendication 1, comprenant en outre : déterminer, au niveau du terminal mobile, l'emplacement du terminal mobile à l'aide d'un système de positionnement qui est interne au terminal mobile.

3. Procédé selon la revendication 2, comprenant en outre : transmettre l'emplacement déterminé à partir du terminal mobile.

4. Procédé selon la revendication 1 comprenant en outre : déterminer l'emplacement du terminal mobile à l'aide d'un système de positionnement qui est externe au terminal mobile.

5. Procédé selon l'une quelconque des revendications précédentes, dans lequel le composant d'interface utilisateur dynamique comprend un menu dynamique permettant d'afficher des informations basées sur la localisation à un utilisateur du terminal mobile.

6. Procédé selon l'une quelconque des revendications précédentes, dans lequel le terminal mobile est configuré pour recevoir uniquement certains types de messages basés sur la localisation.

7. Procédé selon la revendication 6, dans lequel ladite configuration est gérée par un utilisateur du terminal mobile.

8. Procédé selon l'une quelconque des revendications précédentes comprenant en outre : transmettre une notification d'un nouveau contenu utilisé pour mettre à jour le composant d'interface utilisateur dynamique à un utilisateur du terminal mobile.

9. Procédé selon la revendication 8, dans lequel l'étape consistant à transmettre la notification à l'utilisateur comprend : afficher une icône sur un écran du terminal mobile.

10. Procédé selon l'une quelconque des revendications précédentes, dans lequel l'étape consistant à afficher les informations basées sur la localisation dynamiquement comprend : mettre à jour les informations basées sur la localisation dans le terminal pour qu'elles correspondent au nouveau contenu lorsque le contenu des informations basées sur la localisation transmises change.

11. Terminal mobile comprenant des moyens permettant d'exécuter le procédé de l'une quelconque des revendications 1 à 9.

12. Produit programme d'ordinateur comprenant des instructions qui, lorsque le programme est exécuté par un ordinateur, amènent l'ordinateur à mettre en oeuvre les étapes du procédé suivantes :
recevoir (506), au niveau d'un terminal mobile (104), des informations basées sur la localisation associées à l'emplacement du terminal mobile et transmises de façon sans fil à l'aide de la technologie du pousser, les informations basées sur la localisation étant reçues sous la forme d'un ou plusieurs messages de service transmis à l'aide de ladite technologie du pousser sans fil qui sont stockés dans le terminal, et les informations basées sur la localisation étant transmises au terminal uniquement si l'emplacement du terminal est déterminé comme étant situé à l'intérieur d'une zone de service ; et
afficher (508), au niveau du terminal mobile (104), les informations basées sur la localisation dynamiquement en utilisant un composant d'interface utilisateur dynamique (214), à l'intérieur du composant d'interface utilisateur dynamique, les informations basées sur la localisation étant divisées en catégories par sujet.

13. Produit programme d'ordinateur selon la revendication 12, dans lequel les étapes du procédé comprennent en outre : déterminer, au niveau du terminal mobile, l'emplacement du terminal mobile à l'aide d'un système de positionnement qui est interne au terminal mobile.

14. Produit programme d'ordinateur selon la revendication 12 ou la revendication 13, dans lequel les étapes du procédé comprennent en outré :
transmettre l'emplacement déterminé à partir du terminal mobile.

15. Produit programme d'ordinateur selon la revendication 12, dans lequel les étapes du procédé comprennent en outre : déterminer l'emplacement du terminal mobile à l'aide d'un système de positionnement qui est externe au terminal mobile.
